# FASCICULE DE BREVET EUROPEEN

(11) **EP 3 450 326 B1**
(45) Date de publication et mention de la délivrance du brevet: **12.02.2020**
(21) Numéro de dépôt: 17306147.4
(22) Date de dépôt: 05.09.2017
(51) Int. Cl.: B64G 1/42, B64G 1/54, G05B 19/042, H02H 5/00, G05B 21/00, G06F 13/20, H02J 4/00, H04L 29/06

(54) **EQUIPEMENT POUR ENGIN SPATIAL**
AUSRÜSTUNG FÜR RAUMFAHRZEUG
EQUIPMENT FOR SPACECRAFT

(43) Date de publication de la demande: 06.03.2019
(73) Titulaire: Thales, 92400 Courbevoie (FR)
(72) Inventeur: FOSSION, Marc, 5140 Ligny (BE); MAILLARD, Christophe, 5340 Gesves (BE)
(74) Mandataire: Brunelli, Gérald

(56) Documents cités:
- EP-A1- 2 648 300
- US-A1- 2014 039 729
- Daniel Gleeson ET AL: "THE SMART BACKPLANE - LOWERING THE COST OF SPACECRAFT AVIONICS BY IMPROVING THE RADIATION TOLERANCE OF COTS ELECTRONIC SYSTEMS", 33rd Space Symposium, Colorado Springs, Colorado, USA, presented on April 3, 2017, 3 avril 2017 (2017-04-03), XP055456104, Extrait de l'Internet: URL:https://www.spacesymposium.org/sites/d efault/files/downloads/Daniel%20Gleeson%20 THE%20SMART%20BACKPLANE%20-%20LOWERING%20T HE%20COST%20OF%20SPACECRAFT%20AVIONICS.pdf [extrait le 2018-03-02]

## Description

L'invention porte sur un équipement pour engin spatial.

Dans le domaine spatial, il est généralement utilisé de nombreux composants électroniques dits durcis aux radiations, ou en d'autres termes ayant un taux de dysfonctionnement du aux radiations totalement prévisible et inférieur à un seuil, dit seuil acceptable, généralement dix fois plus faible que le taux de panne.

On entend par taux de dysfonctionnement du aux radiations totalement prévisible, un taux de dysfonctionnement que l'on peut prouver par test et calculs.

Le coût de ces composants spécifiquement conçus pour être robustes ou durcis aux effets des radiations est très élevé, aussi il est envisagé d'utiliser de plus en plus de composants dits "pris sur étagère", d'acronyme COTS pour "commercial off the shelf" en langue anglaise, de coût nettement moins élevé. Ces composants non spécifiquement conçus pour fonctionner en présence de radiations, sont issus des applications terrestres automobiles ou militaires préexistantes, d'où la dénomination COTS. Ils sont caractérisés par un taux de disfonctionnement dus aux radiations imprévisible ou supérieur au seuil acceptable. En effet, une pression de plus en plus importante est mise sur les coûts récurrents des équipements spatiaux et particulièrement pour des composants servant à mettre en oeuvre des applications mises en œuvre par des constellations de satellites.

Pour des composants électroniques présents en grande quantité, il est donc économiquement très intéressant d'utiliser des composants COTS en leur faisant subir une batterie de tests supplémentaires.

Les composants électroniques actifs (permettant d'augmenter la puissance d'un signal) dits COTS ne sont pas conçus avec un objectif de tenue aux effets des radiations ionisantes, alors qu'une majorité des composants électroniques passifs dits COTS (ne permettant pas d'augmenter puissance d'un signal) sont capables de résister aux environnements radiatifs spatiaux.

Le document US2014/0039729 A1 divulgue un équipement pour engin spatial comprenant des cartes électroniques munies de composants COTS, dans lequel un pare-feu comprend un module de contrôle et de protection des flux de puissance d'un bus partagé d'échange de puissance.

La présente invention vise à pallier les inconvénients précédemment cités, et particulièrement le problème de la tolérance aux dysfonctionnements sans dégradation des performances de l'engin spatial tout en utilisant des composants dits COTS limitant de manière importante les coûts de réalisation.

Il est proposé, selon un aspect de l'invention, un équipement pour engin spatial comprenant:
des cartes électroniques
des éléments robustes aux radiations i.e. ayant un taux de dysfonctionnement prévisible inférieur à un seuil dénommé seuil acceptable, comprenant:
   - un bus partagé d'échange de puissance électrique entre des cartes électroniques;
   - un bus partagé d'échange de données entre les cartes électroniques;
   - un module de gestion des entrées/sorties et de collecte de télémétrie, par carte électronique;
   - une interface de niveaux électriques entre une carte électronique et le bus partagé d'échange de données par carte électronique;
   dans lequel au moins une carte électronique comprend :
   - une partie munie de composants COTS dont le taux de dysfonctionnement est imprévisible ou supérieur ou égal au seuil acceptable; et
   - un pare-feu constitué de composants robustes aux radiations dont le taux de dysfonctionnement est prévisible et inférieur au seuil acceptable, comprenant un module de contrôle et de protection des flux de puissance du bus partagé d'échange de puissance et un module de contrôle et de protection des entrées/sorties pour gérer l'alimentation et la communication des composants de la carte électronique.

Un tel équipement permet de pouvoir gérer le problème de la tolérance aux pannes sans dégradation des performances en utilisant des composants dits COTS limitant de manière importante les coûts de réalisation.

Dans un mode de réalisation, le bus partagé d'échange de puissance électrique est redondé.

Ainsi, en cas de panne du bus partagé d'échange de puissance électrique, le bus partagé d'échange de puissance électrique de redondance prend le relai.

Selon un mode de réalisation, le bus partagé d'échange de données est redondé.

Ainsi, en cas de panne du bus partagé d'échange de données, le bus partagé d'échange de données de redondance prend le relai.

Dans un mode de réalisation, l'équipement comprend un ordinateur de bord muni d'une partie calculateur, d'une partie gestion de communication et d'une partie gestion de redondance et de reconfiguration, la partie calculateur comprenant des composants COTS dont le taux de dysfonctionnement est imprévisible ou supérieur ou égal au seuil acceptable, et les parties gestion de communication et gestion de redondance et de reconfiguration étant constituées de composants robustes aux radiations dont le taux de dysfonctionnement est prévisible et inférieur au seuil acceptable.

Ainsi, on limite le nombre de composants durcis aux radiations et donc le coût de l'équipement. Les performances (augmentation de puissance de calcul disponible et réduction de la consommation électrique) sont améliorées.

Dans un mode de réalisation, le seuil acceptable est dix fois inférieur au taux de panne intrinsèque des composants.

Selon un autre aspect de l'invention, il est également proposé un engin spatial muni d'un équipement tel que précédemment décrit.

L'invention sera mieux comprise à l'étude de quelques modes de réalisation décrits à titre d'exemples nullement limitatifs et illustrés par les dessins annexés sur lesquels :
- la figure 1 illustre schématiquement un équipement pour engin spatial selon l'état de l'art; et
- la figure 2 illustre schématiquement un équipement pour engin spatial selon un aspect de l'invention

Sur les différentes figures, les éléments ayant des références identiques sont identiques.

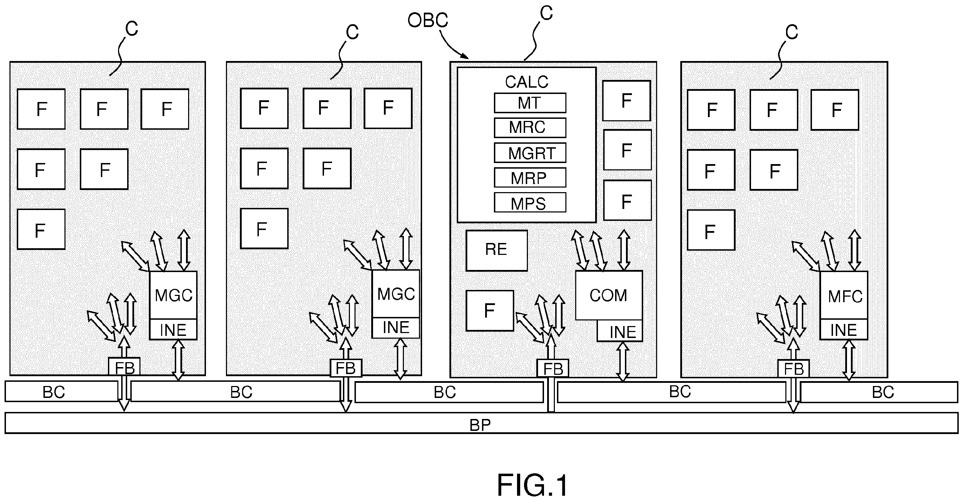

Sur la figure 1, un équipement de l'état de l'art comprend une pluralité de cartes électroniques C, en l'occurrence quatre cartes électroniques, toutes comprenant exclusivement des composants durcis aux radiations, i.e. ayant un taux de panne prévisible et inférieur à seuil.

Toutes comprennent des composants réalisant différentes fonctions avioniques F classiques.

L'équipement comprend également un bus partagé d'échange de puissance électrique BP entre les cartes électroniques C, et un bus partagé d'échange de données BC entre les cartes électroniques C.

Les bus BP et BC sont généralement redondés, pour prendre le relai en cas de panne.

L'une des cartes électroniques C comprend les composants formant l'ordinateur de bord OBC. L'ordinateur de bord OBC comprend une partie calculateur CALC, une partie gestion de communication COM, et une partie gestion de redondance et de reconfiguration RE.

La partie calculateur CALC comprend de manière classique un module de trajectographie MT, un module de régulation MRC de la charge des batteries de l'engin spatial, un module de gestion de régulation thermique MGRT, un module récepteur MRP de positionnement GNSS, et un module pointeur stellaire MPS.

Un fusible FB est disposé entre le bus partagé d'échange de puissance électrique BP et chaque carte électronique C afin de déconnecter du bus partagé d'échange de puissance électrique BP une carte électronique C qui serait défaillante, afin de ne pas propager cette défaillance.

Chaque carte électronique C comprend une interface INE de niveaux électriques entre la carte et le bus partagé d'échange de données par carte électronique BC. Cette interface INE permet d'ajuster les niveaux électriques qui sont généralement différents sur la carte électronique et sur le bus partagé d'échange de données BC (tel un émetteur-récepteur CAN).

En outre, chaque carte électronique C, à l'exception de la carte comprenant l'ordinateur de bord OBC, comprend un module MGC de gestion à distance des entrées/sorties et de collecte de télémétrie. La carte comprenant l'ordinateur de bord OBC, ne comprend pas de module MGC de gestion des entrées/sorties et de collecte de télémétrie, car c'est lui qui re-centralise les informations venant des autres cartes électroniques. En revanche, il doit assurer la gestion et le bon fonctionnement du bus partagé d'échange de données BC.

Un tel équipement est de coût élevé, car il nécessite d'utiliser des cartes électroniques munies exclusivement de composants robustes et durcis aux radiations.

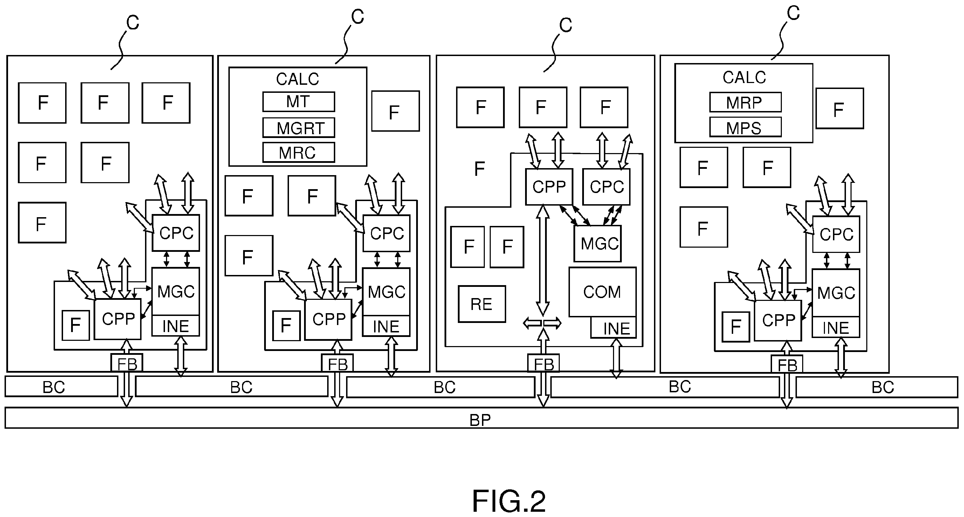

La figure 2 représente un équipement pour engin spatial selon un aspect de l'invention.

L'équipement comprend des cartes électroniques C, en l'occurrence quatre cartes électroniques, comprenant des composants durcis aux radiations, et des composants non durcis aux radiations.

Toutes comprennent des composants réalisant différentes fonctions avioniques F classiques.

L'équipement comprend également un bus partagé d'échange de puissance électrique BP entre les cartes électroniques C, et un bus partagé d'échange de données BC entre les cartes électroniques C.

Les bus BP et BC sont généralement redondés, pour prendre le relai en cas de panne.

Les cartes électroniques C comprennent les composants formant l'ordinateur de bord OBC. L'ordinateur de bord OBC comprend une partie calculateur CALC, une partie gestion de communication COM, et une partie gestion de redondance et de reconfiguration RE.

La partie gestion de communication COM et la partie gestion de redondance et de reconfiguration RE sont constituées d'éléments robustes ou durcis aux radiations, et la partie calculateur CALC comprend des composants non robustes aux radiations.

La partie calculateur CALC comprend de manière classique un module de trajectographie MT, un module de régulation MRC de la charge des batteries de l'engin spatial, un module de gestion de régulation thermique MGRT, un module récepteur MRP de positionnement GNSS, et un module pointeur stellaire MPS. Ces modules de la partie calculateur CALC peuvent être répartis sur différentes cartes électroniques C, par exemple sur deux cartes électroniques sur le présent exemple.

Un fusible FB est disposé entre le bus partagé d'échange de puissance électrique BP et chaque carte électronique C afin de déconnecter une carte électronique C défaillante du bus partagé d'échange de puissance électrique BP, et éviter de propager cette défaillance.

Chaque carte électronique C comprend une interface INE de niveaux électriques entre la carte et le bus partagé d'échange de données par carte électronique BC. Cette interface INE permet d'ajuster les niveaux électriques qui sont généralement différents sur la carte électronique C et sur le bus partagé d'échange de données BC (comme un émetteur-récepteur CAN).

En outre, chaque carte électronique C comprend un module MGC de gestion des entrées/sorties et de collecte de télémétrie.

Les modules MGC sont constitués de composant robustes aux radiations.

Donc toutes les cartes électroniques C comprennent un module MGC de gestion des entrées/sorties et de collecte de télémétrie, à distance ou non.

Chaque carte électronique C comprend un pare-feu constitué de composants robustes aux radiations, comprenant un module CPP de contrôle et de protection des flux de puissance du bus partagé d'échange de puissance et un module CPC de contrôle et de protection des entrées/sorties pour gérer l'alimentation et la communication des composants de la carte électronique.

Un module CPP de contrôle et de protection des flux de puissance du bus partagé d'échange de puissance permet de commander et contrôler de manière dynamique la consommation de puissance et de vérifier qu'elle correspond bien aux tâches exécutées par les composants électroniques présents sur la carte électronique. En cas de discordance on en déduit l'occurrence d'un dysfonctionnement dû aux radiations.

Un module CPC de contrôle et de protection des entrées/sorties pour gérer l'alimentation et la communication des composants de la carte électronique permet de commander et contrôler les flux d'informations qui entrent et sortent des cartes électroniques C. En cas de volume de trafic anormalement bas ou élevé, ou si le contenu est anormal/incohérent on en déduit l'occurrence d'un dysfonctionnement dû aux radiations.

Il est donc possible d'équiper un engin spatial muni d'un équipement selon l'une des revendications précédentes.

Un tel équipement permet donc d'utiliser des composants non durcis aux radiations dans des engins spatiaux, ce qui permet d'utiliser des composants du marché bien plus puissant ou efficaces que ceux classiquement durcis aux radiations, et de diminuer drastiquement le coût d'un tel équipement, tout en respectant les contraintes de disponibilité du service rendu par les équipements aérospatiaux.

## Revendications

1. Equipement pour engin spatial comprenant:
des cartes électroniques (C);
des éléments robustes aux radiations i.e. ayant un taux de dysfonctionnement prévisible et inférieur à un seuil dénommé seuil acceptable, comprenant:
- un bus partagé d'échange de puissance électrique (BP) entre des cartes électroniques (C);
- un bus partagé d'échange de données (BC) entre les cartes électroniques (C);
- un module de gestion (MGC) des entrées/sorties et de collecte de télémétrie, par carte électronique (C);
- une interface de niveaux électriques (INE) entre une carte électronique (C) et le bus partagé (BC) d'échange de données par carte électronique (C);
dans lequel au moins une carte électronique (C) comprend :
- une partie munie de composants "Commercial Off the Shelf", c'est à dire COTS, dont le taux de dysfonctionnement est imprévisible ou supérieur ou égal au seuil acceptable; et
- un pare-feu constitué de composants robustes aux radiations dont le taux de dysfonctionnement est prévisible et inférieur au seuil acceptable, comprenant un module (CPP) de contrôle et de protection des flux de puissance du bus partagé d'échange de puissance et un module (CPC) de contrôle et de protection des entrées/sorties pour gérer l'alimentation et la communication des composants de la carte électronique (C).

2. Equipement selon la revendication 1, dans lequel le bus (BP) partagé d'échange de puissance électrique est redondé.

3. Equipement selon la revendication 1 ou 2, dans lequel le bus (BC) partagé d'échange de données est redondé.

4. Equipement selon l'une des revendications précédentes, comprenant un ordinateur de bord (OBC) muni d'une partie calculateur (CALC), d'une partie gestion de communication (COM) et d'une partie gestion de redondance et de reconfiguration (RE), la partie calculateur (CALC) comprenant des composants COTS dont le taux dysfonctionnement est imprévisible ou supérieur ou égal au seuil acceptable, et les parties gestion de communication (COM) et gestion de redondance et de reconfiguration (RE) étant constituées de composants robustes aux radiations dont le taux de panne est prévisible et inférieur au seuil acceptable.

5. Equipement selon l'une des revendications précédentes, dans lequel le seuil est dix fois inférieur au taux de panne intrinsèque des composants.

6. Engin spatial muni d'un équipement selon l'une des revendications précédentes.

## Patentansprüche

1. Ausrüstung für ein Raumfahrzeug, die Folgendes umfasst:
elektronische Karten (C);
strahlungsbeständige Elemente, d.h. solche mit einer vorhersehbaren Ausfallrate unter einer als akzeptabel bezeichneten Schwelle, die Folgendes umfassen:
- einen gemeinsam genutzten Bus (BP) zum Stromaustausch zwischen den elektronischen Karten (C);
- einen gemeinsam genutzten Bus (BC) zum Datenaustausch zwischen den elektronischen Karten (C);
- ein Modul (MGC) zum Verwalten der Eingänge/Ausgänge und zum Sammeln von Telemetriedaten durch die elektronische Karte (C);
- eine elektrische Niveauschnittstelle (INE) zwischen einer elektronischen Karte (C) und dem gemeinsam genutzten Datenaustauschbus (BC) durch die elektronische Karte (C);
wobei die mindestens eine elektronische Karte (C) Folgendes umfasst:
- einen Teil, der mit handelsüblichen (COTS = Commercial Off The Shelf) Komponenten mit einer vorhersehbaren Ausfallrate auf oder über dem akzeptablen Schwellenwert ausgestattet ist; und
- eine Firewall, gebildet von strahlungsbeständigen Komponenten mit einer vorhersehbaren Ausfallrate unter der akzeptablen Schwelle, umfassend ein Modul (CPP) zum Steuern und Schützen der Stromflüsse des gemeinsam genutzten Stromaustauschbusses und ein Modul (CPC) zum Steuern und Schützen der Eingänge/Ausgänge zum Verwalten der Versorgung und Kommunikation der Komponenten der elektronischen Karte (C).

2. Ausrüstung nach Anspruch 1, wobei der gemeinsam genutzte Stromaustauschbus (BP) redundant ausgeführt ist.

3. Ausrüstung nach Anspruch 1 oder 2, wobei der gemeinsam genutzte Datenaustauschbus (BC) redundant ausgeführt ist.

4. Ausrüstung nach einem der vorherigen Ansprüche, die einen Bordcomputer (OBC) umfasst, ausgestattet mit einem Rechnerteil (CALC), einem Kommunikationsmanagementteil (COM) und einem Redundanz- und Umkonfigurationsmanagementteil (RE), wobei der Rechnerteil (CALC) COTS-Komponenten mit vorhersehbarer Ausfallrate auf oder über der akzeptablen Schwelle und Kommunikations- (COM) und Redundanz- und Umkonfigurationsmanagementteile (RE) umfasst, gebildet aus strahlungsbeständigen Komponenten mit vorhersehbarer Ausfallrate unter der akzeptablen Schwelle.

5. Ausrüstung nach einem der vorherigen Ansprüche, bei der die Schwelle zehnmal kleiner ist als die intrinsische Ausfallrate der Komponenten.

6. Raumfahrzeug, ausgestattet mit einer Ausrüstung nach einem der vorherigen Ansprüche.

## Claims

1. Device for a spacecraft comprising:
electronic boards (C);
elements that are robust to radiation, i.e. that have a foreseeable failure rate that is lower than a threshold called acceptable threshold, comprising:
- a shared bus (BP) for exchanging electric power between electronic boards (C);
- a shared bus (BC) for exchanging data between the electronic boards (C);
- a module (MGC) for managing the inputs/outputs and for telemetry gathering, per electronic board (C);
- an electrical level interface (INE) between an electronic board (C) and the shared data exchange bus (BC), per electronic board (C);
wherein at least one electronic board (C) comprises:
- a part equipped with COTS components whose failure rate is unforeseeable or greater than or equal to the acceptable threshold; and
- a firewall formed of components that are robust to radiation and whose failure rate is foreseeable and lower than the acceptable threshold, comprising a module (CPP) for monitoring and protecting the power flows of the shared power exchange bus and a module (CPC) for monitoring and protecting the inputs/outputs in order to manage the power supply and the communication of the components of the electronic board (C).

2. Device according to Claim 1, wherein the shared electric power exchange bus (BP) is redundant.

3. Device according to Claim 1 or 2, wherein the shared data exchange bus (BC) is redundant.

4. Device according to one of the preceding claims, comprising an on-board computer (OBC) equipped with a calculator part (CALC), with a communication management part (COM) and with a redundancy and reconfiguration management part (RE), the calculator part (CALC) comprising COTS components whose failure rate is unforeseeable or greater than or equal to the acceptable threshold, and the communication management (COM) and redundancy and reconfiguration management (RE) parts being formed of components that are robust to radiation and whose fault rate is foreseeable and lower than the acceptable threshold.

5. Device according to one of the preceding claims, wherein the threshold is ten times lower than the intrinsic fault rate of the components.

6. Spacecraft equipped with a device according to one of the preceding claims.
